(19) **Europäisches Patentamt European Patent Office Office européen des brevets**

(11) **EP 4 775 532 A1**

(12) **EUROPEAN PATENT APPLICATION**
published in accordance with Art. 153(4) EPC

(43) Date of publication:
**15.07.2026 Bulletin 2026/29**

(21) Application number: **24862153.4**

(22) Date of filing: **02.09.2024**

(51) International Patent Classification (IPC):
**C01B 3/06** (2026.01)

(52) Cooperative Patent Classification (CPC):
**Y02E 60/36**

(86) International application number:
**PCT/ES2024/070527**

(87) International publication number:
**WO 2025/052013 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 ES 202330736**

(71) Applicant: **Universidad Politécnica de Madrid 28040 Madrid (ES)**

(72) Inventors:
• **RIVERA DE MENA, Antonio Juan 28040 Madrid Madrid (ES)**
• **PEÑA RODRÍGUEZ, Ovidio Yordanis 28040 Madrid Madrid (ES)**
• **GAROZ GÓMEZ, David 28040 Madrid Madrid (ES)**

(74) Representative: **Sahuquillo Huerta, Jesús Jesana Patentes, SL Jesana iP C/ Huesca 5 ,Oficina 2 46001 Valencia (ES)**

(54) **METHOD AND DEVICE FOR PRODUCING HYDROGEN BY MEANS OF WATER DISSOCIATION BY THERMOCHEMICAL REACTIONS UNDER (QUASI-)ISOTHERMAL CONDITIONS USING DIFFERENT POWER SOURCES**

(57) (EN) The present invention relates to a method for producing hydrogen by means of thermochemical water dissociation cycles under (quasi-)isothermal conditions, wherein said method comprises arranging a large amount of active material (104) inside a reaction volume (109) of a reactor (103); heating the active material (104), reducing the active material (104) and generating oxygen in the reaction volume; evacuating the oxygen produced via a first evacuation path (111) of the outlet (106) of the reactor (103); injecting water into the reaction volume (109) of the reactor, oxidating the active material (104) and producing hydrogen; evacuating the hydrogen produced via a second evacuation path (112) of the outlet (106) of the device (100); and separating the evacuated hydrogen and remaining water. The invention further relates to a device for producing hydrogen.

EP 4 775 532 A1

**Description**

TECHNICAL FIELD

The present invention relates to a method and device for producing hydrogen through the dissociation of water molecules by means of thermochemical reactions under (quasi- )isothermal conditions. The thermochemical reactions are induced by energy obtained from various sources other than solar energy. Electricity is particularly relevant due to its wide availability, as is waste heat from various industrial processes, given the possibility of reusing it in the form of hydrogen.

BACKGROUND OF THE INVENTION

At the time of writing this patent, green hydrogen is considered the most relevant energy vector for the near future. Green hydrogen will not only replace natural gas but will also be used in a wide range of applications in transportation and industry, as well as in energy distribution and storage applications (Turner, J. et al. Renewable hydrogen production. International Journal of Energy Research 32, 379-407, 2008).

Green hydrogen is practically the only realistic option for drastically reducing pollutant emissions and thus achieving sustainability goals. The most widely used method of green hydrogen production today, due to its degree of maturity, is based on the use of electrolysers powered by electricity from renewable sources, such as photovoltaic or wind power.

However, when the main source is solar radiation, the efficiency of the photovoltaic-electrolyzer combination is very low. On the other hand, methods based on thermochemical reduction-oxidation (redox) reactions require a heat source. These methods make much more efficient use of solar energy capture (Perkins, C. & Weimer, A. W. Solar-thermal production of renewable hydrogen. AIChE Journal 55, 286-293, 2009).

Methods based on thermochemical reactions dissociate the water molecule into oxygen and hydrogen through a two- or more-step process.

First, the active material, capable of sustaining redox reactions, is reduced at high temperatures, generally between 1,100 and 2,300 K, releasing oxygen, according to the reduction half-reaction, and leaving oxygen vacancies in its structure. In a second step, the material is oxidized in the presence of water, according to the oxidation half-reaction, releasing only hydrogen.

$$MO_X + E_{thermal}^{reduction} \rightarrow MO_{X-\delta} + \frac{\delta}{2}O_2 \qquad (1)$$

$$MO_{X-\delta} + \delta H_2O \rightarrow MO_X + \delta H_2 + E_{thermal}^{oxidation} \qquad (2)$$

This thermochemical process has been extensively studied with a large number of active materials, where the reduction temperature is reached by heating, ideally using concentrated solar energy (Abanades, S., Charvin, P., Flamant, G., & Neveu, P. Screening of water-splitting thermochemical cycles potentially attractive for hydrogen production by concentrated solar energy. Energy 31, 2805-2822, 2006). The review article by Oudejans et al. (Oudejans, D., Offidani, M., Constantinou, A., Albonetti, S., Dimitratos, N., Bansode, A., 2022. A Comprehensive Review on Two-Step Thermochemical Water Splitting for Hydrogen Production in a Redox Cycle. Energies 15, 3044) shows the development of hydrogen production from thermochemical reactions, highlighting the methodologies and experimental facilities used.

The methods that show the best efficiencies for hydrogen production from solar energy (Chueh, W. C. et al. High-Flux Solar-Driven Thermochemical Dissociation of CO2 and H2O Using Nonstoichiometric Ceria, Science 330, 1797-1801 (2010); Muhich, C. L. et al. Efficient Generation of H2 by Splitting Water with an Isothermal Redox Cycle, Science 341 , 540-542, 2013) are designed to work primarily with high solar concentration systems, such as central tower or parabolic dish systems (Muhich, C. L. et al. A review and perspective of efficient hydrogen generation via solar thermal water splitting, WIREs Energy and Environment 5, 261-287, 2016).

These methodologies have been tested in the laboratory and, in some cases, in solar concentration towers, with different systems for heating an active material that can be a porous monolith, particles, or even have a gaseous phase (Mao, Y., Gao, Y., Dong, W., Wu, H., Song, Z., Zhao, X., Sun, J., Wang, W., 2020. Hydrogen production via a two-step water splitting thermochemical cycle based on metal oxide - A review, Applied Energy 267, 114860). In certain oxides, it has been shown that nanometer-sized material improves the speed of the reduction reaction (Bulfin, B., Lowe, A.J., Keogh, K.A., Murphy, B.E., Lübben, O., Krasnikov, S.A., Shvets, I.V., 2013, Analytical Model of CeOs Oxidation and Reduction. J. Phys. Chem. C 1 17, 24129-24137) . Among the patented inventions involving thermochemical cycles, WO2008113944A2 and CN112323092A are particularly noteworthy, where the reactive material is brought into the gas phase during reduction.

Other devices circulate the reactive material particles in a fluidized bed (US20120237440A1 ) or mechanically move the particles from a reduction zone with direct irradiation to a storage or oxidation region (EP11003735A, US9399575B2). Although most inventions seek to heat the active material with solar energy, there are systems that heat the active material with microwaves (WO2021159874A1) or other sources of thermal energy, such as laboratory devices (Y. Mao et al., Hydrogen production via a two-step water splitting thermochemical cycle based on metal oxide - A review, Applied Energy, vol. 267, p. 114860, Jun. 2020). These thermal energy sources can be powered by electricity. The referenced devices that operate with sources other than solar energy are far removed from the design of the present invention and have very low efficiencies.

It is important to mention that most of the above systems operate at different temperatures for the reduction and oxidation half-reactions; that is, they require a thermal jump that occurs when the material is cooled during oxidation in the presence of water. The energy consumed in the subsequent reheating of the material during reduction significantly reduces efficiency.

On the other hand, publications studying cycles under isothermal (equal temperature in both half-reactions) or quasi-isothermal (similar temperatures in both half-reactions) conditions show a theoretical improvement in efficiency (Al-Shankiti, I., Ehrhart, B.D., Weimer, A.W., 2017. Isothermal redox for H2O and CO2 splitting - A review and perspective, Solar Energy, Advances in Solar Thermochemistry 156, 21-29).

The problem detected in (quasi-)isothermal cycles isotherms is the large amount of water needed to oxidize the material, which implies high energy expenditure to vaporize the water, making it necessary to use heat recovery systems and/or alternatives capable of minimizing water consumption.

A technology that solves this problem has been described in application ES2932843. This application describes a method and device for producing hydrogen from thermochemical reactions , using concentrated solar energy as the primary source. However, the solution described in this application has several limitations imposed by the use of solar energy, such as the use of a small amount of active material.

Another significant limitation of the solution described in patent ES2932843 is the heat trap. The use of solar energy requires that the heat trap allow light to enter, considerably limiting its purpose of retaining the black body radiation emitted by the hot active material. This results in energy losses that decrease the efficiency of the device. This limitation becomes more evident as higher temperatures are used, because the emission spectrum of the hot material increasingly resembles that of the sun (the surface of the sun has a temperature of 5,772 K). In other words, as the temperature increases, the thermal trap allows more energy to escape. In practice, this means that the operating temperature of the reactor is considerably limited by this problem, and at lower temperatures, less active material is reduced and therefore less hydrogen is produced per cycle (in other words, the power of the reactor is lower). This problem is exacerbated when using little active material. The synergistic effect of both problems means that the scalability of the reactors is compromised.

In summary, while a solar device is the most attractive technology in the medium and long term, other options are needed that are more feasible in the short term and may be equally attractive in certain niche markets and/or during the transition to a hydrogen-based economy. Another scenario in which these systems can be very interesting is when there is an excess of some type of energy (e.g., a surplus of electricity production) that needs to be stored.

SUMMARY OF THE INVENTION

The present invention relates to a method and device that takes advantage of the characteristics of various energy sources, other than solar, to optimize reduction and oxidation processes, improving the intrinsic efficiency of current methods based on thermochemical reactions.

The present invention describes new embodiments of devices and methods that improve, either by complementing or replacing, other configurations known in the prior art, using various energy sources other than solar energy to produce hydrogen through thermochemical water dissociation cycles, with improved performance. Thus, according to the present application, each of the energy sources other than solar can be defined as a non-solar energy source.

Thus, in a first aspect of the invention, a method for producing hydrogen by means of thermochemical water dissociation cycles is described. These thermochemical cycles are carried out under quasi-isothermal conditions (i.e., at an approximately constant temperature), using an active material.

In this report, an active material is understood to be one that is capable of being cyclically reduced and oxidized, producing hydrogen in each oxidation half-cycle. In other words, this material is partially reduced in the reduction half-cycle, consuming energy in the form of heat, and oxidized in the oxidation half-cycle, due to interaction with water, releasing or producing hydrogen.

This process then comprises the following steps:

a) placing the active material inside a reaction volume of a reactor;

b) heating the reaction volume, reducing the active material and generating oxygen in the reaction volume;

c) evacuating the oxygen produced through a first evacuation path from the reactor outlet;

d) injecting water into the reaction volume of the reactor, oxidizing the active material and producing hydrogen; and

e) evacuating the hydrogen produced through a second evacuation path from the device outlet.

By heating the reaction volume in step b, the hot active material can emit heat by radiation. However, up to 99% of this heat emitted by the hot active material is returned to the reaction volume by means of a heat trap, preventing its loss and thus improving the efficiency of the process. In other words, the reaction volume is heated by a combined supply of heat from a primary non-solar energy source and a supply of energy recovered from the radiation losses of the active material.

According to this process, it is particularly important to have an (almost) constant temperature in the reactor so that the oxidation half-reaction occurs very quickly, as it starts at the optimum reduction temperature and, at the end of the oxidation process, the temperature has fallen slightly due to contact with the injected water.

A second aspect of the invention describes a device for producing hydrogen by means of thermochemical water dissociation cycles under quasi-isothermal conditions using an active material capable of sustaining redox cycles with hydrogen production.

This device comprises:

a) a reactor comprising, in turn, a reaction volume configured to contain an active material inside and carry out the thermochemical cycles of water dissociation;

b) an inlet, connected to a water injection system, configured to introduce water into the reactor;

c) a gas outlet, comprising a two-way system, where:

i. a first evacuation path is configured to evacuate oxygen from the reaction volume of the reactor;

ii. a second evacuation path is configured to evacuate the hydrogen produced from the reaction volume of the reactor;

d) a thermal trap configured to confine the energy emitted in the form of radiation within the reactor and absorb it in an area close to the reaction volume of the reactor, comprising at least one radiation reflector, located inside a hermetic container, configured to prevent, during use, the escape of radiation emitted by the hot active material;

e) a non-solar energy source configured to heat, during use, an active material disposed in the reactor reaction volume; and

f) a process control system comprising a set of valves and pumps configured to regulate the stages of the redox cycle, synchronizing the opening and closing of the water injection system and the outlet of the gases generated.

According to the present invention, non-solar energy sources are understood to be those sources, including but not limited to:

- Electricity (e.g., by resistive or inductive heating);

- High-temperature industrial waste heat (e.g., hot fluids from furnaces or any industrial process);

- Microwaves;

- Nuclear;

- Geothermal;

- Infrared radiation;

- Combinations of the above.

When using any of these non-solar energy sources, the heat trap can have a highly efficient reflector, capable of reflecting up to 99% of the radiation emitted by the hot material, enveloping the reaction volume of the reactor and considerably limiting radiation losses. The presence of the non-solar energy source during oxidation, the heat trap, and the fact that oxidation reactions are exothermic mean that the temperature of the active material does not decrease significantly during the oxidation half-reaction, thus avoiding a drop in performance. When solar energy is used as the primary source, in the best case scenario, temperatures of up to 2,000 K are reached, limited by the available solar radiation and because not all the energy lost by radiation can be recovered. Therefore, an additional advantage of these non-solar energy sources is that they allow working at higher temperatures, up to 2,500 K, limited only by the materials, with the consequent improvement in the intrinsic efficiency of the thermochemical cycle.

In addition to the improved capacity of the thermal trap according to the present invention to retain the radiation emitted by the hot material, there is also the capacity to reduce heat losses due to conduction and convection provided by the hermetic container, preferably under vacuum. As a result, both the device and the process described in the present invention have much lower heat losses than known solutions for harnessing solar energy.

On the one hand, a system that replaces solar energy with a non-solar source retains several of the characteristics of other current solutions based on solar energy, for example:

1. Providing an active material, either in the form of a layer, granules, or porous solid, and maintaining it at approximately a constant temperature. This results in a quasi-isothermal process, close to the optimum operating temperature. Thus, starting from stoichiometric material, the optimum reduction point can be reached in a time of around 60-600 s, reducing efficiency losses. In addition, these arrangements favor the transport of gases and reduce the recapture of molecules, avoiding losses in system performance.

2. Use conventional gas pumping systems, with residence times of the order of seconds, less than the time needed to achieve the optimum degree of reduction of the active material. In this way, the oxygen released into the vacuum during the reduction half-reaction can be evacuated before water is admitted (by injecting a controlled mass of liquid water or steam) to induce the oxidation half-reaction. Similarly, the hydrogen released in this half-reaction can be evacuated before the next reduction-oxidation cycle begins. This alternating pumping of both gases naturally minimizes recombination losses and can avoid the use of inert atmospheres during the reduction half-reaction.

3. Consume a small amount of water, significantly reducing losses caused by water vaporization in the oxidation half-cycle.

However, the device according to the present invention is optimized for use with non-solar energy sources, which enables the invention to:

1. Improve the efficiency of the heat trap by not having to allow the solar spectrum to enter, as it reflects up to 99% of the black body radiation emitted by the hot active material.

2. Use the device continuously 24 hours a day.

3. Operate at higher temperatures (up to 2500 K in these systems versus a maximum of 2000 K in the solar case), as it comprises a better heat trap and is not limited by the available solar radiation.

4. Use a greater amount of active material in the reaction volume, which translates into a higher hydrogen production capacity per cycle.

In this way, by eliminating heat losses due to radiation, which are intrinsic to a solution with a solar energy source, and reducing those corresponding to the water vaporization process, the efficiency of the process is greater. Therefore, the solution described in the present invention can replace or function in a complementary manner (as the case may be) to all forms of generating hydrogen in the prior art (electrolysis, photolysis, biological systems, etc.). Additionally, the use of a higher operating temperature than that of solar solutions allows the intrinsic efficiency of thermochemical cycles to be increased.

When coupled with a fuel cell, it can replace batteries in all types of applications. Two particularly interesting cases are vehicles, especially heavy and long-distance (road) vehicles, and self-consumption applications, where it could even be possible for a house to be completely disconnected from the grid (electricity and gas), as the hydrogen produced with the surplus electrical energy from a photovoltaic system could cover both electricity needs in the absence of sun and gas for heating.

Finally, the hydrogen produced can be used, with or without purification stages, as a raw material in industry, as is done today, and can also replace natural gas in all applications where it or other hydrocarbons are used to generate heat.

The following references have been used in the figures:

100. Device

101. Airtight container

102. Heat trap

103. Reactor

104. Active material

105. Reactor inlet

106. Reactor outlet

107. Control system

108. Non-solar energy source

109. Reaction volume

110. Injection system

111. First evacuation route

112. Second evacuation route

201. Resistance

301. High-temperature fluid heating medium jacket

401. Electromagnetic radiation thermal module

BRIEF DESCRIPTION OF THE FIGURES

Figure 1 shows a schematic diagram of an embodiment of the device consisting of a vacuum-sealed container, a reflector, and a reactor containing the active material in its reaction volume, through which gases circulate from an inlet and an outlet.

Figure 2 shows a schematic diagram of a preferred embodiment of the device, where the device comprises an electrical power source, with heating by means of a resistance arranged around the reactor.

Figure 3 shows a schematic diagram of an embodiment of the device, where the device comprises a thermal energy source, with heating by means of a high-temperature fluid arranged around the reactor (in the form of a standard heat exchanger).

Figure 4 shows a schematic diagram of an embodiment of the device, wherein the device comprises a non-solar electromagnetic energy source, consisting of an electromagnetic radiation thermal module that radiates energy to the active material, heating the active material to the working temperature.

Figure 5 shows a schematic diagram of an embodiment of the device, wherein the device comprises a process control system consisting of an automatic control module.

DETAILED DESCRIPTION OF THE INVENTION

In a first aspect of the invention, the solution relates to a method for producing hydrogen by means of thermochemical water dissociation cycles under (quasi-)isothermal conditions from an active material capable of sustaining redox cycles, with hydrogen production in each oxidation half-cycle, wherein said material is partially reducible in the reduction half-cycle, consuming energy in the form of heat, and oxidizes in the oxidation half-cycle, due to interaction with water.

This process comprises the following steps:

a) placing the active material (104) inside a reaction volume (109) of a reactor (103);

b) heating the reaction volume (109) by jointly supplying heat from a non-solar energy source (108) and heat recovered by a heat trap (102) from radiation losses from the active material (104), reducing the active material (104) and generating oxygen in the reaction volume; c) evacuating the oxygen produced through a first evacuation path (111) from the outlet (106) of the device (100);

c) injecting water into the reaction volume (109) of the reactor (103), oxidizing the active material (104) and producing hydrogen; and

d) evacuating the hydrogen produced through a second evacuation path (112) from the outlet (106) of the device (100).

Part of the heat emitted by the hot active material (104) during the heating of the reactor (103) in step b) can be recovered, generating a temperature increase in an absorbent disposed within the reaction volume (109).

Unlike other previous solutions, such as that described in application ES2932843, the present invention manages to eliminate the limitations imposed by the use of solar energy.

Thus, by not requiring light to enter the reaction volume, up to 99% of the radiation emitted by the hot active material (104) can be recovered by the heat trap (102) and fed back as recovered heat in stage b). This reduces energy losses, increasing the efficiency of the device. This improvement becomes more evident as higher temperatures are used. That is, as higher temperatures are used, the heat trap (102) manages to further reduce energy losses.

In addition, the use of a non-solar energy source (108) as described in the present invention allows a greater amount of active material (104) to be used, due to the higher power density of these energy sources.

The total power of the reactor (103) is directly proportional to the amount of active material (104) used, so the ability to increase the amount of active material (104) used translates into higher-powered devices and more efficient processes.

Therefore, increasing the amount of active material (104) used, together with the improvement of the heat trap (102) according to the present invention, substantially improves the scalability of this type of device compared to other known devices.

In a particular embodiment, the active material (104) occupies at least 75% of the reaction volume (109), allowing gas transfer within the reactor (103) in the remaining 25% of the reaction volume (109). Additionally, in a particular embodiment, where the active material (104) is in powder form or is a porous material, the active material (104) may be arranged to occupy the entire reaction volume (109), since the space between grains or the porosity of the material itself allows for adequate gas transfer.

In one embodiment, the active material (104) may act as a direct absorber of the radiation reflected by the heat trap. However, in an alternative embodiment, the active material (104) may be arranged in contact with the absorber, so that heat from the absorber is transmitted to the active material (104) by thermal conduction.

Optionally, the hydrogen obtained according to the present invention and the remaining water may require additional separation and/or purification procedures, for example, a water condensation process. Thus, the procedure may additionally comprise a step of separating the evacuated hydrogen and remaining water.

In order to carry out the process for producing hydrogen, the solution according to the present invention relates, in a second aspect, to a device (100) for producing hydrogen.

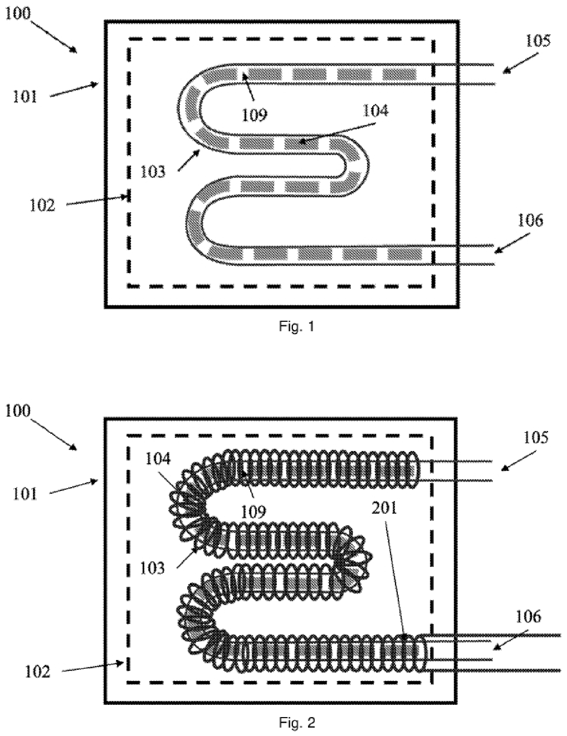

Figure 1 shows a schematic diagram of an embodiment of the device (100) consisting of a sealed container (101), a reflector (102), and a reactor (103) containing the active material (104) within its reaction volume (109), through which the components circulate from an inlet (105) and an outlet (106).

This reactor (103) comprises a reaction volume (109) configured to contain an active material (104) inside it and carry out the thermochemical cycles of water dissociation.

As indicated above, there are numerous materials that can act as active material (104), among which metal oxides such as ceria, ferrites, zinc oxide, tin oxide, or more novel materials based on perovskites can be highlighted, without ruling out other materials. For this reason, the reactor (103) can have numerous configurations, adapting to the active material (104) used, a preferred embodiment being a tubular reactor, as shown in Figure 1, where the active material (104) is arranged along the length of the reaction volume (109).

The reaction volume (109) is configured to arrange an active material (104) in different configurations. If the active material (104) does not act as a direct absorber of the radiation returned by the heat trap (102), the reactor (103) may also comprise a means, for example, a second material, to act as an absorber of the returned radiation, which may also act (or not) as a support for the active material. That is, said reactor may comprise an absorber associated with the active material (104), where said absorber is configured to transmit the recovered heat to the active material (104) by conduction. Additionally, said absorber is preferably an absorbent support.

Alternatively, the active material (104) may be arranged in the form of micrometric or submicrometric powder. As in the method, the reaction volume (109) of the device may be configured to contain the active material (104) occupying at least 75% of the reaction volume (109). This allows gas transfer within the reactor (103) in the remaining 25% of the reaction volume (109). Additionally, in a particular embodiment, where the active material (104) is in powder form or is a porous material, the reaction volume (109) can be configured so that the active material (104) occupies the entire reaction volume (109), since the space between grains or the porosity of the material itself allows for adequate gas transfer.

If the active material (104), arranged in powder form, does not act as an absorbent, the reactor (103) comprises an absorbent, capable of absorbing the infrared radiation reflected by the heat trap and transmitting it to the active material (104), preferably in the form of a layer, or as inclusions. An example of inclusions are nanometal particles, for example, plasmonic particles.

In another embodiment, the active material (104) may be arranged as a porous bulk material, such that the gases generated in the reaction volume (109) flow through the porosities. Again, if the active material (104) does not act as a direct absorber, the reactor (103) may comprise an absorber, such as inclusions, capable of absorbing the infrared radiation reflected by the heat trap and transmitting it to the active material (104).

On the other hand, the device (100) comprises a non-solar energy source (108) which, as indicated above, is different from solar energy, and is configured to heat, in use, the active material (104) disposed in the reaction volume of the reactor (103). Preferably, the temperature reached through the use of a non-solar energy source (108) is up to 2500 K, limited only by the materials. In this way, the optimum reduction temperature of the active material (104) used is set, which will remain practically constant throughout the process.

Compared to other state-of-the-art solutions, less energy is required to keep the reaction volume (109) to a certain temperature lower due to the combined contribution of the heat delivered by the non-solar energy source (108) and the energy recovered from the radiation emitted by the active material (104).

In a preferred embodiment, the non-solar energy source (108) is an energy source selected from the group consisting of: a resistive heat source, an inductive heat source, a hot fluid-based source, an electromagnetic radiation source, a nuclear energy source, a geothermal energy source, and a combination of these sources.

Specifically, the device (100) for producing hydrogen may have a resistive heat source (an electrical resistor) arranged around the reactor (103). The use of electricity as the non-solar energy source (108) of the device (100) allows this device (100) to be used as a replacement for the electrolysers currently used to generate green hydrogen, avoiding the limitations present in this type of equipment.

Alternatively, a heat source composed of a high-temperature fluid contained in a jacket (301) surrounding the reactor (103) may be used, or the reverse configuration, with the hot fluid contained in a tube that is concentrically surrounded by the reactor (103) . In other words, the reactor (103) would be configured in a manner equivalent to a heat exchanger to transmit the energy of a high-temperature fluid to the active material (104).

In this regard, the waste heat from certain industrial processes that release a high-temperature fluid, higher than the operating temperature of the reactor (103), could optionally be used as a non-solar energy source (103), which would help optimize existing energy resources. Therefore, it is a way to convert energy that is currently lost into hydrogen.

Another option is to obtain the hot fluid using nuclear energy as a non-solar energy source (108). The most attractive option, but not necessarily the only one, is the use of gas-cooled high-temperature reactors. These reactors can achieve very high fuel utilization rates and operate at high temperatures, which favors hydrogen production according to the present invention. For example, an ideal type of reactor for this purpose could be based on the Very High-Temperature Reactor (VHTR) concept. -High-Temperature Reactor) concept. These reactors will have an outlet temperature of 1,000 °C, using graphite as a moderator and helium or molten salt as a coolant. An additional advantage would be the passive safety system of these devices.

Alternatively, electromagnetic radiation, such as microwaves or infrared radiation, could be used as a non-solar energy source (108).

The use of microwave radiation as a non-solar energy source (108) allows high temperatures of up to 2500 K to be reached and provides additional advantages, such as the fact that all the active material (104) is coupled into the energy field, absorbing energy directly throughout the reaction volume. This implementation is particularly interesting when ceramics are used as the active material (104).

The great advantage of using infrared modules as a non-solar energy source (108) is that they can be perfectly adjusted to the absorbing properties of the active material (104), simplifying the process and the device (100). In other words, the use of an absorbent support medium in the reaction volume in addition to the active material (104) is avoided. Another major advantage of infrared heating modules is their scalability, which is ideal for their current implementation.

Finally, a combination of sources comprising a first non-solar energy source selected from the group described above and a second energy source may be used as a non-solar energy source (108), where, in addition to these sources, the possibility of using solar energy is included. Using more than one energy source has the advantage that systems can be designed that, depending on availability, can operate continuously. For example, one embodiment of the present invention comprises a mixed energy source using solar energy during the day and any of the other non-solar energy sources during the night.

To achieve a substantial improvement over other state-of-the-art solutions, the device (100) comprises a heat trap (102). Said heat trap (102) has at least one radiation reflector, surrounding the reactor (103), so that it confines the energy emitted in the form of radiation within the reaction volume (109) of the reactor (103). In this way, radiation losses during the heating of the active material (104) are avoided.

In a preferred embodiment, the heat trap (102) comprises a reflector that completely surrounds the reactor (103), preventing the energy emitted by the hot materials in the form of radiation from being lost. In another preferred embodiment, the reflector of the heat trap (102) may have a layered structure (Bragg mirror), with a layer designed to confine and absorb infrared or visible radiation, close to the active material (104), and transmitting the absorbed energy by conduction.

As mentioned above, the configuration of the heat trap (102) according to the present invention allows higher temperatures, up to 2,500 K, to be reached in the reaction volume (109), which translates into a faster (and greater) reduction of the active material (104), substantially improving the kinetics of the redox reaction and decreasing the mass of active material required.

Thus, in a specific case where coke is used as the active material (104), temperatures above 1700 K can be easily achieved using any of the non-solar energy sources (108) described above, which increases the reaction kinetics and the efficiency of the process.

The reactor (103), as well as its enclosure, which forms the heat trap (102), is in turn contained in a hermetic container (101). This container (101) preferably has low thermal conductivity, preventing heat loss by conduction, and provides vacuum conditions to the system, which inhibit loss by convection. According to the embodiment shown in Figure 1, the hermetic container (101) has a parallelepiped structure, with a cubic shape being preferable, although this configuration may vary depending on the design used for the reactor (103) and the heat trap (102), for example, in the form of a cylinder.

Finally, the device (100) has a process control system (107). This control system (107) is associated with a set of valves and pumps and is configured to regulate the stages of the redox cycle, synchronizing the opening and closing of the water injection system (110) and the outlet of the gases generated. The synchronization comprises the regulation of the time of each of the stages, opening and closing the water inlet and separating the gases generated in each stage. In this way, the oxygen generated in the reduction half-reaction and the hydrogen generated in the oxidation half-reaction are evacuated from the reactor (103) separately and without mixing, before the entry of water vapor from the next redox cycle. Specifically, the first and second evacuation paths (111, 112) may comprise one or more pumps to evacuate the compounds and, additionally, be common to both evacuation paths.

In a preferred embodiment, the control system (107) is an automatic control system, which achieves the correct admission of the steam pulses and the correct evacuation of hydrogen and oxygen.

Additionally, as the solution does not depend on solar energy, the device (100) can operate continuously 24 hours a day, which is very advantageous in all applications that require a continuous supply of hydrogen, eliminating or reducing hydrogen storage requirements.

Next, with the help of the accompanying figures, a preferred embodiment of the present invention of a device for producing hydrogen by means of thermochemical water dissociation cycles under (quasi-)isothermal conditions is described.

Figure 2 shows an embodiment of a device (100) that uses a non-solar (108) electrical energy source. In this case, said non-solar energy source consists of a heat-generating resistor (201) arranged around the reactor (103). The heat generated by the resistor is transmitted by conduction to the reaction volume of the reactor (103) and consequently to the active material (104).

The diagram shows resistive heating, but other alternative means of electrical heating could also be used, such as induction heating, for which the reactor (103), or at least part of it, must be suitable for inducing eddy currents by means of variable magnetic fields.

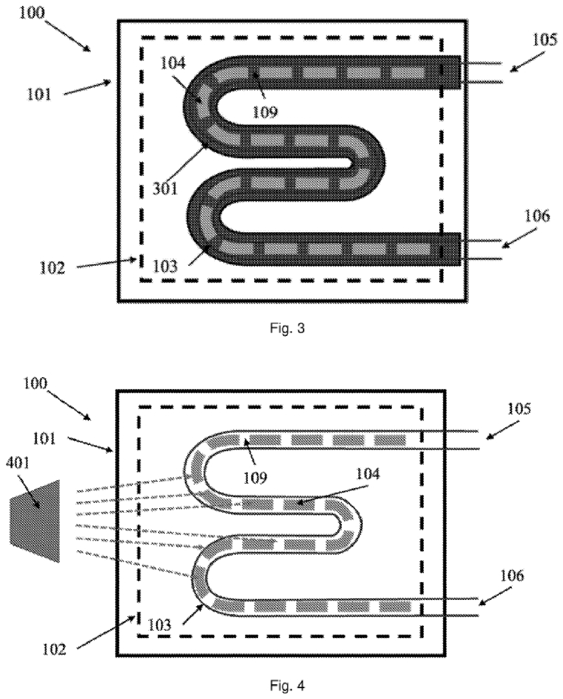

Alternatively, Figure 3 shows a preferred embodiment of a device (100) that uses as a non-solar energy source (108) a high-temperature fluid contained in a jacket (301) concentric with said reactor (103). Specifically, a device (100) with a tubular reactor (103) is shown, where the non-solar energy source (108) is a high-temperature fluid heating medium (301) arranged around the reaction volume of said reactor (103), forming a set of concentric tubes, where the high-temperature fluid flows through the outer part of the reactor (103). In another preferred embodiment, said fluid may come from an industrial process, a gas-cooled nuclear reactor, a geothermal source, without excluding other heat sources. In this way, the concentric jacket (301) transmits heat from a high-temperature fluid by conduction to the reactor (103) and consequently to the active material (104).

An alternative configuration to that shown in Figure 3 is one in which the hot fluid passes through a tube, this tube being concentrically surrounded by the reactor (103) and in direct contact with the active material (104). Both this configuration and the previous one function as a heat exchanger, since the active material (104) receives energy from a fluid that is at a higher temperature.

Similarly, Figure 4 shows an embodiment of a device (100) that uses a thermal electromagnetic radiation module (401) as a non-solar energy source (108) (401) as a non-solar energy source (108). This electromagnetic radiation thermal module (401) radiates energy to the active material (104), heating it to the operating temperature.

Examples of an electromagnetic radiation thermal module (401) may be an infrared or microwave module, without excluding other energy sources. In this way, the reactor (103), or at least part of it, must be suitable for absorbing the radiation from the active material (104) used and converting it into heat that is transmitted to the active material (104) contained in the reactor (103).

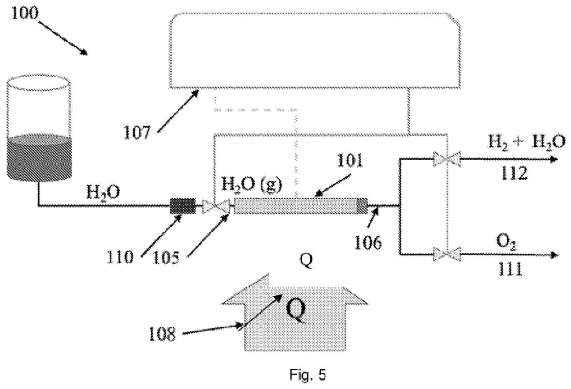

Finally, Figure 5 shows an embodiment of the device (100), which comprises a process control system (107) consisting of an automatic control module. This automatic control module in turn comprises a set of sensors, controllers, and actuators. In this way, the actuators of the control module are connected to the valves of the inlet and outlet flows of the reactor (103). Thus, the valves can be activated to open or close according to the cycles established in the process to produce hydrogen, separating the flow of oxygen generated from the flow formed by hydrogen and water at the outlet.

On the other hand, Figure 5 shows how the inlet (105) is connected to a water injection system (110), allowing a flow of water to enter the reaction volume (109) of the reactor (103). In a preferred embodiment, the water injection system (110) comprises a vaporizer, configured to introduce a flow of water in the form of vapor. This vaporizer can be powered by energy from multiple sources, including solar energy.

According to a preferred process, i.e., one with a 1:1 ratio between the number of moles of water consumed and moles of hydrogen produced in each cycle, an intrinsic process efficiency greater than 85% can be estimated, due to the inevitable losses caused by the vaporization of water.

In a preferred embodiment, the volume available for water injected in each cycle, i.e., the volume not occupied by the active material (104), represents less than 10% of the reaction volume (109).

According to this preferred embodiment, hydrogen is produced with low water consumption (preferably a molar ratio between water and hydrogen of 1:1, and never greater than 10:1), so that losses for generating steam during the oxidation half-cycle are considerably reduced, allowing very high intrinsic efficiencies to be achieved.

Furthermore, in another preferred embodiment, the water injection system (110) has a pulsed inlet. This pulsed configuration gives the system greater control over the process, allowing for better separation of the gas flows obtained during the process.

For its part, the outlet (106) is preferably a gas outlet and comprises a two-way system, a first way and a second way, where:

a. the first evacuation way (111) is configured to evacuate the oxygen produced from the reaction volume (109) of the reactor (103).

b. the second evacuation path (112) is configured to evacuate the hydrogen produced, possibly mixed with the water remaining from the oxidation, from the reaction volume (109) of the reactor (103), and

Therefore, as shown in these embodiments, there are multiple options for use as a non-solar energy source (108), other than solar energy. These configurations allow for a considerable improvement in the efficiency of the system with respect to the state of the art and enable it to compete advantageously with other solutions currently in use, such as electrolysers. A device (100) and a process for producing hydrogen capable of operating continuously 24 hours a day are thus achieved, as it does not depend on solar energy, reducing heat losses due to radiation, which translates into a complement or replacement for known solutions.

**Claims**

1. A method for producing hydrogen by means of thermochemical water dissociation cycles under (quasi-)isothermal conditions from an active material capable of sustaining redox cycles, with hydrogen production in each oxidation half-cycle, where said material is partially reduced in the reduction half-cycle, consuming energy in the form of heat, and reoxidized in the oxidation half-cycle, due to interaction with water, where said process comprises the following steps:

a) placing the active material (104) inside a reaction volume (109) of a reactor (103);
b) heating the active material (104) by means of the combined supply of heat from an alternative energy source (108) and heat recovered from radiation losses from the active material (104), reducing the active material (104) and generating oxygen in the reaction volume (109);
c) evacuating the oxygen produced through a first evacuation path (111) from the outlet (106) of the reactor (103);
d) injecting water into the reaction volume (109) of the reactor (103), oxidizing the active material (104) and producing hydrogen; and
e) evacuating the hydrogen produced through a second evacuation path (112) from the outlet (106) of the device (100)

**characterized in that** step b) of heating the active material (104) is carried out by the combined supply of heat from a non-solar energy source (108) and heat recovered from the radiation losses of the active material (104),
where the flow of heat supplied, recovered from the radiation losses of the material, is up to 99% of the radiation emitted by the active material (104).

2. The method for producing hydrogen according to claim 1, where the supply and evacuation of compounds and energy is carried out automatically.

3. The method for producing hydrogen according to any of claims 1 to 2, wherein the method is carried out in a vacuum.

4. The method for producing hydrogen according to any of claims 1 to 3, wherein the energy emitted by the hot material is retained within the reaction volume (109) by a heat trap (102).

5. The method for producing hydrogen according to any of claims 1 to 4, wherein the method comprises a final step of separating the hydrogen and the remaining water evacuated in step e).

6. The method for producing hydrogen according to any of claims 1 to 5, wherein the active material is in powder form or is a porous material.

7. The method for producing hydrogen according to claim 6, wherein the active material occupies at least 75% of the reaction volume.

8. A device for producing hydrogen by means of thermochemical water dissociation cycles under (quasi-)isothermal conditions, from an active material capable of sustaining redox cycles with hydrogen production in each oxidation half-cycle, wherein said material is partially reduced in the reduction half-cycle, consuming energy in the form of heat, and oxidized in the oxidation half-cycle due to interaction with water, **characterized in that** said device comprises:

a reactor (103) comprising a reaction volume (109) configured to contain an active material (104) therein and to carry out the thermochemical cycles of water dissociation;
an inlet (105), connected to a water injection system (110), configured to introduce a flow of water into the reactor (103);
a gas outlet (106), wherein said outlet comprises a two-way system, wherein a first evacuation path (111) is configured to evacuate oxygen produced from the reaction volume (109), and a second evacuation path (112) configured to evacuate produced hydrogen and remaining water from the reaction volume (109);
a non-solar energy source (108) configured to heat, in use, an active material (104) disposed in the reaction volume (109) of the reactor (103);
a heat trap (102) configured to confine energy emitted in the form of radiation within the reactor and absorb it in a zone proximate to the reaction volume (109) of the reactor (103), comprising at least one radiation reflector, located inside a sealed container (101), configured to reflect, in use, up to 99% of the radiation emitted by a hot active material (104); and
a process control system (107) comprising a set of valves and pumps configured to regulate the stages of the redox cycle, synchronizing the opening and closing of the water injection system (110) and the outlet of the gases generated.

9. The device for producing hydrogen according to claim 8, wherein the non-solar energy source (108) is an energy source selected from the group consisting of: a resistive heat source, an inductive heat source, a high-temperature fluid-based source, an electromagnetic radiation source, a nuclear energy source, a geothermal energy source, and a combination of these sources.

10. The device for producing hydrogen according to claim 9, wherein the heat source is an electrical resistance arranged around the reaction volume (109).

11. The device for producing hydrogen according to claim 9, wherein the heat source is a high-temperature fluid contained in a concentric jacket (301) surrounding the reactor (103).

12. The device for producing hydrogen according to claim 9, wherein the heat source is a high-temperature fluid contained in a tube, wherein said tube is concentrically surrounded by the reactor (103).

13. The device for producing hydrogen according to claim 9, wherein the source of electromagnetic radiation is a source of radiation selected from the group consisting of: microwaves or infrared radiation.

14. The device for producing hydrogen according to any of claims 8 to 13, wherein the heat trap (102) is attached to the hermetic container (101).

15. The device for producing hydrogen according to any of claims 8 to 14, wherein the reaction volume (109) is configured to contain active material (104) disposed in a layer adhered to a substrate, or as micrometric or submicrometric powder, or within a porous container, or as a porous bulk material.

Fig. 1

Fig. 2

Fig. 3

Fig. 4

100

107

$H_2O$

110 105

$H_2O$ (g)

101

106

Q

108 Q

$H_2 + H_2O$

112

$O_2$

111

Fig. 5

| | |
|---|---|
| **INTERNATIONAL SEARCH REPORT** | International application No. |
| | PCT/ES2024/070527 |

## A. CLASSIFICATION OF SUBJECT MATTER

***C01B3/06*** (2006.01)

According to International Patent Classification (IPC) or to both national classification and IPC

## B. FIELDS SEARCHED

Minimum documentation searched (classification system followed by classification symbols)
C01B

Documentation searched other than minimum documentation to the extent that such documents are included in the fields searched

Electronic data base consulted during the international search (name of data base and, where practicable, search terms used)

INVENES, EPODOC, WPI, TXPUS, TXPWO, TXPCN, TXPSPJ, NPL, INSPEC, COMPENDEX, GOOGLE, GOOGLE PATENTS, GOOGLE SCHOLAR.

## C. DOCUMENTS CONSIDERED TO BE RELEVANT

| Category* | Citation of document, with indication, where appropriate, of the relevant passages | Relevant to claim No. |
|---|---|---|
| X | ES 2932843 A1 (UNIV MADRID POLITECNICA) 26/01/2023, page 6, line 16 – page 13, line 32, claims 1, 5-8, 10, 13 and 14, figure 5. | 1-15 |
| A | ABANADES, S., FLAMANT, G. Thermochemical hydrogen production from a two-step solar-driven water-splitting cycle based on cerium oxides. Solar Energy, 2006, Vol. 80, N° 12, pages 1611-1623. 1. Introduction, 2. Thermodynamics of the cycle, experimental set-up, and results. | 1-15 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 30/01/2025 | **(31/01/2025)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. González Rodríguez Telephone No. 913493290 |

Form PCT/ISA/210 (second sheet) (July 2022)

**INTERNATIONAL SEARCH REPORT**

| International application No. |
|---|
| PCT/ES2024/070527 |

C (continuation). DOCUMENTS CONSIDERED TO BE RELEVANT

| Category * | Citation of documents, with indication, where appropriate, of the relevant passages | Relevant to claim No. |
|---|---|---|
| A | FERNÁNDEZ-SAAVEDRA, R., et al. Hydrogen production by two-step thermochemical cycles based on commercial nickel ferrite: Kinetic and structural study . International Journal Of Hydrogen Energy, 2014, Vol. 39, N° 13, pages 6819-6826. 1. Introduction, 2. Experimental procedure. | 1-15 |
| A | GAO, Y., et al. Efficient generation of hydrogen by two-step thermochemical cycles: Successive thermal reduction and water splitting reactions using equal-power microwave irradiation and a high entropy material . Applied Energy, 2020, Vol. 279, pages 115777. 1. Introduction, 2. Experimental section. | 1-15 |
| A | WO 2021159874 A1 (UNIV SHANDONG) 19/08/2021, abstract [on line] retrieved from EPODOC/EPO and WPI/DERWENT. | 1-15 |
| A | GOKON, N., SUDA, T., KODAMA, T. Thermochemical reactivity of 5–15 mol% Fe, Co, Ni, Mn-doped cerium oxides in two-step water-splitting cycle for solar hydrogen production. Thermochimica Acta, 2015, Vol. 617, pages 179-190. 2. Experimental | 1-15 |
| A | GOKON, N., et al. Ferrite/zirconia-coated foam device prepared by spin coating for solar demonstration of thermochemical water-splitting. International Journal Of Hydrogen Energy, 2011, N° 3, pages 2014-2028. 2. Experimental procedure. | 1-15 |
| A | SAFARI, F., DINCER, I. A review and comparative evaluation of thermochemical water splitting cycles for hydrogen production.. Energy Conversion And Management, 2020, Vol. 205, pages 112182. 2. Hydrogen production methods, 5. Conclusions. | 1-15 |
| A | XIAO, L., WU, S., LI, Y. Advances in solar hydrogen production via two-step water-splitting thermochemical cycles based on metal redox reactions.. Renewable Energy, 2012, Vol. 41, pages 1-12. 1. Indroduction. | 1-15 |
| A | ES 2926393 B2 (UNIV REY JUAN CARLOS ET AL.) 22/06/2023, page 6, line 29 – page 7, line 4. | 1-15 |

Form PCT/ISA/210 (continuation of second sheet) (July 2022)

## INTERNATIONAL SEARCH REPORT

Information on patent family members

International application No.

PCT/ES2024/070527

| Patent document cited in the search report | Publication date | Patent family member(s) | Publication date |
|---|---|---|---|
| ES2932843 A1 | 26.01.2023 | WO2024023379 A1 | 01.02.2024 |
| WO2021159874 A1 | 19.08.2021 | CN111302302 A | 19.06.2020 |
| | | CN111302302B B | 15.10.2021 |
| ES2926393 B2 | 22.06.2023 | WO2022189689 A1 | 15.09.2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008113944 A2
- CN 112323092 A
- US 20120237440 A1
- EP 11003735 A
- US 9399575 B2
- WO 2021159874 A1
- ES 2932843

### Non-patent literature cited in the description

- **TURNER, J. et al.** Renewable hydrogen production. *International Journal of Energy Research*, 2008, vol. 32, 379-407
- **PERKINS, C.** ; **WEIMER, A. W.** Solar-thermal production of renewable hydrogen. *AIChE Journal*, 2009, vol. 55, 286-293
- **ABANADES, S.** ; **CHARVIN, P.** ; **FLAMANT, G.** ; **NEVEU, P.** Screening of water-splitting thermochemical cycles potentially attractive for hydrogen production by concentrated solar energy. *Energy*, 2006, vol. 31, 2805-2822
- **OUDEJANS, D.** ; **OFFIDANI, M.** ; **CONSTANTINOU, A.** ; **ALBONETTI, S.** ; **DIMITRATOS, N.** ; **BANSODE, A.** A Comprehensive Review on Two-Step Thermochemical Water Splitting for Hydrogen Production in a Redox Cycle. *Energies*, 2022, vol. 15, 3044
- **CHUEH, W. C. et al.** High-Flux Solar-Driven Thermochemical Dissociation of CO2 and H2O Using Nonstoichiometric Ceria. *Science*, 2010, vol. 330, 1797-1801
- **MUHICH, C. L. et al.** Efficient Generation of H2 by Splitting Water with an Isothermal Redox Cycle. *Science*, 2013, vol. 341, 540-542
- **MUHICH, C. L. et al.** A review and perspective of efficient hydrogen generation via solar thermal water splitting. *WIREs Energy and Environment*, 2016, vol. 5, 261-287
- **MAO, Y.** ; **GAO, Y.** ; **DONG, W.** ; **WU, H.** ; **SONG, Z.** ; **ZHAO, X.** ; **SUN, J.** ; **WANG, W.** Hydrogen production via a two-step water splitting thermochemical cycle based on metal oxide - A review. *Applied Energy*, 2020, vol. 267, 114860
- **BULFIN, B.** ; **LOWE, A.J.** ; **KEOGH, K.A.** ; **MURPHY, B.E.** ; **LÜBBEN, O.** ; **KRASNIKOV, S.A.** ; **SHVETS, I.V.** Analytical Model of CeOs Oxidation and Reduction. *J. Phys. Chem. C*, 2013, vol. 1 (17), 24129-24137
- **Y. MAO et al.** Hydrogen production via a two-step water splitting thermochemical cycle based on metal oxide - A review. *Applied Energy*, June 2020, vol. 267, 114860
- **AL-SHANKITI, I.** ; **EHRHART, B.D.** ; **WEIMER, A.W.** Isothermal redox for H2O and CO2 splitting - A review and perspective. *Solar Energy, Advances in Solar Thermochemistry*, 2017, vol. 156, 21-29